# FASCICULE DE BREVET EUROPEEN

(11) **EP 2 110 363 B1**
(45) Date de publication et mention de la délivrance du brevet: **18.06.2014**
(21) Numéro de dépôt: 09158106.6
(22) Date de dépôt: 17.04.2009
(51) Int. Cl.: C02F 9/00, C02F 101/10, C02F 1/04, C02F 1/44, C02F 101/16, C02F 1/66, C02F 101/30, C02F 103/02, B01D 61/02

(54) **Procédé de traitement des effluents aqueux de purge ou de nettoyage des circuits de générateurs de vapeur et unité mobile permettant la mise en oeuvre de ce procédé**
Mobile Anlage und Verfahren zur Behandlung wässriger Ströme aus einem Dampferzeuger oder entstanden durch Reinigung davon
Mobile plant and process for treating aqueous streams from purging or cleaning steam generator circuits

(30) Priorité: 18.04.2008 FR 0852638
(43) Date de publication de la demande: 21.10.2009
(73) Titulaire: VEOLIA EAU - COMPAGNIE GENERALE DES EAUX, 75008 Paris (FR)
(72) Inventeur: Paillard, Hervé, 86340 Vernon (FR); De Bénédittis Jérôme, 69100 Villeurbanne (FR); Bonnefoy, Joseph, 26120 Montmeyran (FR)
(74) Mandataire: Cardy, Sophie Marie

(56) Documents cités:
- EP-A- 1 734 013
- WO-A-2004/099087
- WO-A-2005/009908
- DE-A1- 19 901 571
- US-A- 4 983 302
- US-A1- 2005 211 632
- US-A1- 2006 201 882

## Description

L'invention concerne un procédé de traitement des effluents aqueux produits par les générateurs de vapeur et les circuits de vapeur associés. L'invention concerne également une unité mobile permettant la mise en oeuvre de ce procédé de traitement des effluents aqueux.

Par exemple, de façon non limitative, il peut s'agir des circuits secondaires de centrale nucléaire ou des circuits primaires de centrale thermique, ou encore de circuits de vapeur équipant tout autre type d'unité industrielle.

Plus précisément, l'invention concerne le traitement des effluents aqueux de purge ou de nettoyage chimique, à savoir respectivement des effluents de faible concentration engendrés en continu pour l'entretien et le nettoyage préventifs des circuits de vapeur, ou bien des effluents plus concentrés résultant d'opérations de maintenance régulières mais ponctuelles, ou encore des effluents encore davantage concentrés générés à l'occasion de nettoyages plus poussés réalisés de façon exceptionnelle.

Les produits utilisés lors de ces opérations de traitement de l'eau à des dosages différents réalisent ce que l'on appelle un traitement de conditionnement de l'eau qui alimente ces générateurs de vapeur : en effet, l'eau subit un traitement chimique lui conférant les caractéristiques souhaitées en fonction de l'installation utilisée.

De cette façon, la mise en oeuvre de ce traitement de conditionnement de l'eau permet de protéger de l'entartrage, de la corrosion et de dépôt de primage toute l'installation et notamment les canalisations de transfert de vapeur et de retour des condensats ainsi que les échangeurs thermiques. On rappelle que le primage est le phénomène d'entrainement d'eau avec la vapeur.

Lors de ce traitement de conditionnement, on utilise en particulier les familles de produits suivantes :
- des alcalinisants permettant d'augmenter le pH de l'eau et de neutraliser le CO₂ dissous par décomposition en carbonates et bicarbonates, et de ce fait de diminuer les risques de corrosion : à base organique et/ ou minérale, notamment des amines telles que la morpholine, l'ammoniaque, la soude caustique NaOH, ou encore les phosphates tels qu'orthophosphates, phosphate trisodique Na₃PO₄, phosphate d'ammonium (NH₄)₃PO₄ ;
- des dispersants-complexants (ou anti-tartre et anti-scalants) permettant d'éviter la précipitation des sels et de fixer les métaux qui proviennent des couches d'oxydes métalliques des canalisations : acides et sels d'acides carboxyliques ou poly-carboxyliques, notamment EDTA ou acide éthylènediamine tétracétique, NTA ou acide nitrilotriacétique, les polymères acryliques et méthacryliques, les phosphonates;
- des inhibiteurs de corrosion sous la forme de réducteurs pour réduire les oxydes des métaux formés et l'oxygène dissous : notamment hydrazine N₂H₄, sulfite, tanins, amines volatiles et amines filmantes ; et
- des produits anti-primage : polyamides, polyéthylène et propylène glycols .....

Il faut noter qu'au préalable, l'eau est déminéralisée par un traitement d'adoucissement (sur résines échangeuses d'ions ou sur membranes (par osmose inverse)) afin de fournir une eau peu chargée de sels minéraux, en particulier de sels alcalino-terreux. Ainsi, l'eau utilisée dans les générateurs de vapeur présente une faible concentration notamment d'ions de calcium et de magnésium, ce qui est aussi le cas pour les effluents de ces installations.

En conséquence de ce qui précède, les effluents contiennent des produits chimiques de conditionnement et/ou de nettoyage (morpholine, hydrazine, amines, EDTA....) ainsi que les sous-produits du traitement de l'eau et du nettoyage (métaux comme le fer et le cuivre, l'ammoniaque...).

De ce fait, ces effluents ne peuvent pas être rejetés dans le milieu récepteur ou bien dans les ouvrages d'épuration des sites industriels ou des collectivités sans traitement de purification préalable car leur concentration en produits chimiques dépasse les normes de rejet admissibles ou leur seuil de toxicité vis-à-vis des traitements d'épuration biologiques.

Les effluents aqueux produits par les générateurs de vapeur et leurs circuits thermiques associés ont principalement trois origines :
- Les purges de chaudière qui constituent une production continue ou discontinue mais régulière d'effluents contenant l'ensemble des produits de conditionnement à faible concentration. Ces effluents sont soit envoyés vers le système d'épuration du site (traitement physico-chimique et/ou biologique) si il existe ou sinon ils sont stockés et transportés vers un centre de destruction. Ils y sont traités par évapo-incinération ou par incinération directe.
- Les condensats qui sont traités sur le site et recyclés vers la chaudière. Les condensats étant faiblement concentrés en produits de conditionnement (en général quelques ppm), le traitement des condensats est réalisé sur le site, en continu et comprend généralement une filtration pour éliminer les matières en suspension (oxydes métalliques) et les huiles libres et un traitement par un ou deux étages de résines échangeuses d'ions pour éliminer les sels (provenant des produits de conditionnement) qui risquent de se concentrer. L'effluent de l'unité de traitement et de recyclage des condensats est envoyé vers le système d'épuration du site (traitement physico-chimique et/ou biologique) si il existe ou sinon ils sont stockés et transportés vers un centre de destruction.
- Les effluents de nettoyage chimique qui constituent une production périodique avec une forte concentration en produits de conditionnement permettant un nettoyage curatif. Ces effluents sont stockés puis transportés vers un centre de destruction.

On comprend donc que la plupart du temps, ces effluents sont stockés et transportés vers un centre de destruction, ce qui exige de gérer des volumes d'effluents importants, d'où des coûts significatifs notamment dus au transport de ces volumes importants. On connait notamment le document WO 2004/099087 qui divulgue un procédé de traitement d'eaux usées contenant des nitrates.

La présente invention a pour objectif de fournir un procédé de traitement des effluents aqueux de purge ou de nettoyage des circuits de générateurs de vapeur permettant de surmonter les inconvénients de l'art antérieur et en particulier offrant la possibilité de traiter sur place ces effluents en les concentrant très fortement, de sorte que seul le concentrât nécessite éventuellement d'être transporté jusqu'au centre de destruction.

A cet effet, selon la présente invention, le procédé comprend les étapes selon la revendication 1. Les étapes suivantes sont notamment mises en oeuvre :
- filtration de l'effluent brut pour séparer les matières insolubles de l'effluent filtré, et
- concentration de l'effluent filtré en deçà, et de préférence jusqu'à une valeur proche, de la limite de solubilité des espèces dissoutes de façon à obtenir un concentrat liquide, l'étape de concentration comportant au moins les traitements d'évapo-concentration et d'osmose inverse,
le pH de l'effluent étant ajusté entre une valeur de 5 et de 6,5.

On adopte en outre les dispositions suivantes :
- l'ajustement du pH de l'effluent est réalisé en amont du traitement d'osmose inverse ;
- l'étape de concentration comporte les traitements d'évapo-concentration et d'osmose inverse, et, le traitement d'évapo-concentration est réalisé sur le concentrat d'osmose ;
- l'étape de concentration comprend en outre un traitement par résine échangeuse d'ions sur le perméat du traitement d'osmose inverse

De cette manière, on peut obtenir un concentrat liquide vraiment concentré en polluants, et de préférence très concentré en polluants (de quelques dizaines à quelques centaines de grammes par litre), les espèces dissoutes étant alors proches de leur limite de solubilité dans le concentrat liquide qui se rapproche d'une liqueur ou d'un sirop des sels des produits de conditionnement.

Ainsi, le procédé selon l'invention permet de traiter des effluents très concentrés en métaux, en composés azotés et en acides organiques de plusieurs g/l et de produire un effluent traité conforme aux normes de rejet (inférieures à quelques mg/l) dans l'environnement.

Cette solution présente aussi l'avantage supplémentaire, de permettre de réduire d'un facteur de 5 à 30 le volume d'effluent à transporter vers le centre d'élimination spécialisé d'où une réduction importante des coûts de transport et de destruction.

Globalement, grâce à la solution selon la présente invention, il est possible de réaliser de façon assez simple une concentration importante des effluents aqueux produits par les générateurs de vapeur et les circuits de vapeur associés même si ces derniers comportent une forte concentration en résidus de produits de conditionnement et d'autrès composés chimiques indésirables tels que les métaux ou oxydes métalliques.

En premier lieu, les effluents aqueux produits par les générateurs de vapeur et leurs circuits thermiques associés sont d'abord filtrés pour éliminer les matières insolubles comme les huiles libres, les colloïdes et les matières en suspension (oxydes métalliques). Il s'agit d'une pré-filtration de sécurité permettant de protéger les étapes de traitement aval des colmatages.

Ces effluents aqueux présentent des valeurs de pH plutôt basiques. Selon l'invention, on réalise en second lieu un ajustement du pH entre une valeur de 5 et de 6,5. Cette disposition permet avantageusement d'atteindre, à l'issue de l'étape de concentration, des rendements d'élimination élevés des composés chimiques solubles, et en particulier de la morpholine et des composés azotés tels que l'ammoniaque et les amines, mais aussi de l'hydrazine, des agents complexants des métaux comme l'EDTA, ainsi que des métaux (notamment le fer et le cuivre).

Cette plage de valeur résulte d'un compromis.

En effet, selon la présente invention, on ajuste le pH du milieu à des valeurs acides ou proches de la neutralité, mais jamais inférieures à 4,5 pour éviter toute précipitation d'acides organiques qui colmaterait les équipements de traitement (membranes d'osmose et échangeur pour le cas de l'évapo-concentration).

En outre, l'élimination des acides organiques des effluents considérés par osmose ou par évapo-concentration sera d'autant plus efficace que le pH du milieu sera élevé pour que ces molécules soient entièrement sous leur forme ionisée. Pour les autres composés organiques présents qui sont essentiellement des composés azotés basiques ainsi que pour l'ammoniaque, plus le pH sera faible et meilleure sera l'efficacité des procédés d'osmose inverse et d'évapo-concentration car plus le pH sera bas et plus ces molécules seront ionisées. En pratique, pour avoir un abattement significatif des composés azotés par osmose ou par évapo-concentration, il faut maintenir le pH du milieu en dessous de 7,5.

Ainsi, selon l'invention, on maintient le pH du milieu entre 5 et 6,5 pour éliminer simultanément par osmose inverse et par evapo-concentration les composés à fonction acide organique et les composés organiques à fonction azotée ainsi que l'ammoniaque.

De façon préférentielle, le pH de l'effluent est ajusté à une valeur supérieure ou égale à 5,2, de préférence supérieure ou égale à 5,4 et avantageusement à une valeur supérieure ou égale à 5,5. Selon la disposition de l'invention, qui permet de réaliser une concentration élevée malgré des taux élevés de polluants comme la morpholine, l'ammoniaque, des amines et des métaux dans les effluents, lors de l'étape de concentration, on réalise au moins les deux traitements comprenant l'évapo-concentration et l'osmose inverse, et le traitement par résine échangeuse d'ions.

En outre, on adopte de préférence une ou plusieurs des dispositions suivantes :
- l'ajustement du pH est réalisé en amont du traitement d'évapo-concentration ;
- l'ajustement du pH est réalisé en amont de l'étape de filtration ;
- le traitement d'osmose inverse est réalisé en un seul étage ;
- le traitement d'osmose inverse est réalisé en deux étages, avec alimentation du second étage d'osmose inverse avec le perméat du premier étage.

Selon un autre aspect de la présente invention, on propose une unité mobile pour le traitement des effluents aqueux de purge ou de nettoyage des circuits de générateurs de vapeur, qui est spécialement adaptée pour la mise en oeuvre du procédé exposé précédemment.

A cet effet, l'unité mobile comporte les caractéristiques de la revendication 7. Elle comprend notamment :
- un conduit d'entrée apte à être relié à une cuve contenant l'effluent,
- un module de filtration apte à séparer les matières insolubles de l'effluent filtré,
- un module de traitement par évapo-concentration avec une entrée, une sortie pour le distillat et une sortie pour le concentrat,
- un module de traitement par osmose inverse avec une entrée, une sortie pour le perméat et une sortie pour le concentrat,
- un module d'ajustement du pH avec une entrée et une sortie,
- au moins un conduit de sortie destiné à la sortie de l'effluent traité, et
- des canalisations reliant entre eux, au conduit d'entrée et au conduit de sortie, les entrées et les sorties des différents modules, et des vannes permettant l'ouverture et la fermeture desdites canalisations.

L'unité mobile comporte en outre un module de traitement par résine échangeuse d'ions avec une entrée pour la solution de régénération, une entrée pour le liquide à traiter, une sortie pour l'éluat et une sortie pour le filtrat.

Ainsi, grâce à une telle unité mobile, il est possible de mettre en oeuvre le procédé de traitement des effluents aqueux de purge ou de nettoyage des circuits de générateurs de vapeur selon l'invention, selon différentes configurations permettant d'optimiser le traitement mis en oeuvre selon le type de polluants et le taux de ces polluants. De plus, il est possible de transporter la machine de traitement de site en site, soit près des générateurs de vapeur produisant les effluents à traiter, soit sur un site de traitement spécialisé vers lequel sont transportés les effluents à traiter.

D'autres avantages et caractéristiques de l'invention ressortiront à la lecture de la description suivante faite à titre d'exemple et en référence aux dessins annexés dans lesquels :
- la figure 1 représente une première filière de traitement selon un premier mode de réalisation qui ne met pas en oeuvre le procédé selon l'invention ;
- la figure 2 représente une deuxième filière de traitement selon un deuxième mode de réalisation qui ne met pas en oeuvre le procédé selon l'invention ;
- la figure 3 représente une troisième filière de traitement selon un troisième mode de réalisation qui ne met pas en oeuvre le procédé selon l'invention ;
- la figure 4 représente une quatrième filière de traitement selon un quatrième mode de réalisation qui ne met pas en oeuvre le procédé selon l'invention ;
- la figure 5 représente une cinquième filière de traitement selon un cinquième mode de réalisation qui ne met pas en oeuvre le procédé selon l'invention ;
- la figure 6 représente une sixième filière de traitement selon un sixième mode de réalisation qui ne met pas en oeuvre le procédé selon l'invention ;
- la figure 7 représente une septième filière de traitement selon un septième mode de réalisation qui met en oeuvre le procédé selon l'invention ;
- la figure 8 représente une huitième filière de traitement selon un huitième mode de réalisation qui ne met pas en oeuvre le procédé selon l'invention ;
- la figure 9 représente une neuvième filière de traitement selon un neuvième mode de réalisation qui ne met pas en oeuvre le procédé selon l'invention ;
- la figure 10 représente une dixième filière de traitement selon un dixième mode de réalisation qui ne met pas en oeuvre le procédé selon l'invention ;
- la figure 11 représente une onzième filière de traitement selon un onzième mode de réalisation qui ne met pas en oeuvre le procédé selon l'invention, et
- la figure 12 est une représentation schématique d'une unité mobile permettant la mise en oeuvre du procédé selon l'invention.

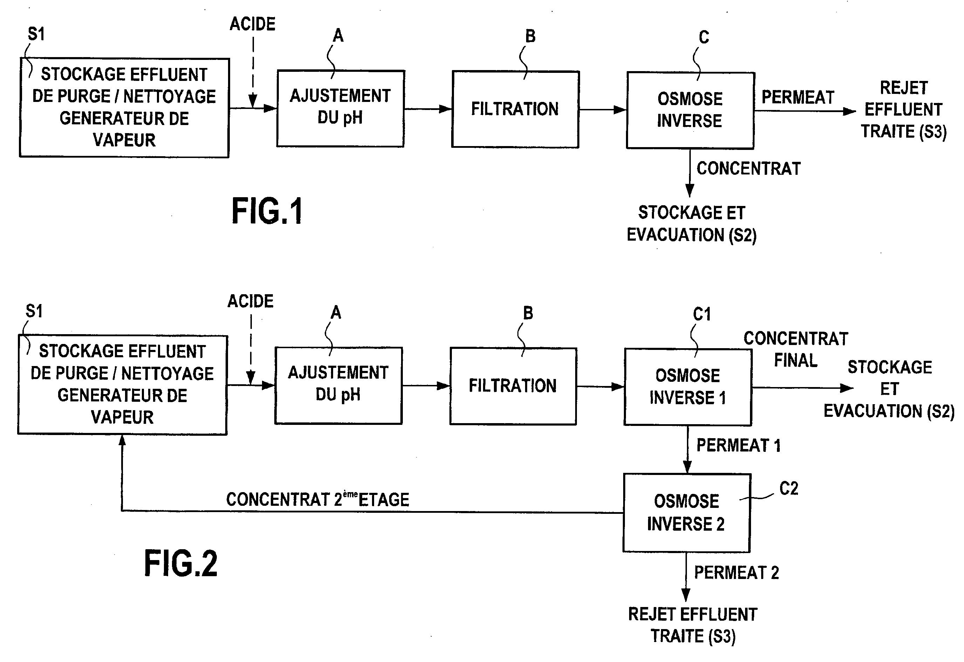

Selon un premier mode de réalisation, on propose une première filière de traitement selon la figure 1, qui comporte une cuve S1 pour le stockage des effluents aqueux de purge ou de nettoyage des circuits de générateurs de vapeur. A partir de cette cuve S1, les effluents sont soumis à une étape d'ajustement du pH entre une valeur de 5 et de 6,5 (module A), puis à une étape de filtration (module B), et enfin à une étape de concentration au moyen d'un traitement par osmose inverse (module C). A l'issue du traitement par osmose inverse, le concentrat est stocké dans une cuve S2 avant d'être évacué et transporté vers un centre de destruction, tandis que le perméat, peu concentré, peut être rejeté (cuve ou canalisation d'évacuation S3).

Dans cette première filière, est prévu un seul étage d'osmose inverse qui constitue le seul traitement de l'étape de concentration du procédé de traitement.

Cette configuration relativement simple convient notamment au traitement d'un effluent de nettoyage chimique de générateur de vapeur peu à moyennement chargé en composés azotés (voir exemple 1 ci-après) ou au traitement d'un effluent de nettoyage chimique de générateur de vapeur moyennement chargé en composés azotés et en métaux (voir exemple 2 ci-après).

### Exemple 1 : Application de l'osmose inverse au traitement d'un effluent de nettoyage chimique de générateur de vapeur moyennement chargé en composés azotés

Les conditions de cet essai sont les suivantes :
- pré-traitement de filtration de 10 µm de seuil de coupure, et
- ajustement du pH à 6,3 avant osmose inverse,
- température de 20 à 22°C,
- membrane d'osmose type DOW BW30-400.

**Tableau 1**

| | pH | Morpholine | NH4 | N2H4 |
|---|---|---|---|---|
| | | mg/l | mg/l | mg/l |
| Effluent brut | 9,2* | 645 | 200 | 0,1 |
| Perméat osmose | 6,6 | 7,5 | 6,9 | <0,01 |
| Normes de Rejet | 6,5-8,5 | 10 | 7 | 15 |

| | | | | |
|---|---|---|---|---|
| * Valeur sur effluent non acidifié. L'essai d'osmose inverse a été réalisé sur échantillon acidifié à pH= 6,3 avec de l'acide sulfurique. | | | | |

Le taux de conversion hydraulique obtenu de est 5.

En outre, cet essai de traitement par osmose, conduit sur un effluent de nettoyage de générateur de vapeur moyennement chargé en produits de conditionnement, montre que les composés azotés sont abattus et que les limites de rejet du site sont respectées.

### Exemple 2 : Application de l'osmose inverse au traitement d'un effluent de nettoyage chimique de générateur de vapeur chargé en métaux et en produits de conditionnement et de nettoyage (morpholine, hydrazine, ammoniaque et amines).

Les conditions de cet essai sont les suivantes :
- pré-traitement de filtration de 10 µm de seuil de coupure,
- ajustement du pH à 6,5 avant osmose inverse,
- membrane d'osmose type DOW BW30-400.

**Tableau 2**

| | pH | Conductivité | Morpholine | NH4 | N2H4 | NTK | Fe | Zn | Cu | EDA |
|---|---|---|---|---|---|---|---|---|---|---|
| | | mS/cm | mg/l | mg/l | mg/l | mg/l | mg/l | mg/l | mg/l | mg/l |
| Effluent brut | 9,9* | 9,2* | 546,1 | 2253 | 23,40 | 6300 | 17,6 | 126,1 | 462,3 | 10 416 |
| Concentrat osmose | 6,3 | 89 | | 7300 | - | 24800 | 95 | 680 | 2090 | - |
| Perméat osmose | 6,8 | 0,39 | < 7,5 | 33,1 | <5 | 45 | < 1 | < 1 | 0,74 | - |
| Normes de rejet | 6,5-8,5 | - | 10 | 7 | 15 | - | 5** | 5** | 5** | - |

| | | | | | | | | | | |
|---|---|---|---|---|---|---|---|---|---|---|
| * Valeur sur effluent non acidifié. L'essai d'osmose inverse a été réalisé sur échantillon acidifié à pH= 6,5 avec de l'acide sulfurique ** Norme de rejet en métaux totaux | | | | | | | | | | |

Le taux de conversion hydraulique obtenu est de 5,4.

Les résultats donnés dans le tableau 2 montrent une élimination satisfaisante des métaux et des composés azotés alors qu'on partait d'une forte concentration en composés azotés et en métaux (jusqu'à plusieurs g/l).

Dans cet exemple, la concentration finale en ammoniaque reste supérieure à la norme de rejet : cependant, un traitement de finition par résine d'échange d'ions cationique permet d'abaisser cette concentration finale en ammoniaque, ainsi que sur l'azote et la morpholine (voir exemple 4 ci-après).

Selon un deuxième mode de réalisation, on propose une deuxième filière de traitement selon la figure 2, qui comporte une cuve S1 pour le stockage des effluents aqueux de purge ou de nettoyage des circuits de générateurs de vapeur. A partir de cette cuve S1, les effluents sont soumis à une étape d'ajustement du pH entre une valeur de 5 et de 6,5 (module A), puis à une étape de filtration (module B), et enfin à une étape de concentration au moyen d'un double traitement par osmose inverse à double étage (modules C1 et C2).

A la sortie du premier étage d'osmose inverse (module C1), le concentrat est stocké dans une cuve S2 avant d'être évacué et transporté vers un centre de destruction, tandis que le perméat du premier étage d'osmose inverse (module C1), peu concentré, alimente le second étage d'osmose inverse (module C2). A la sortie de ce second étage d'osmose inverse (module C2) le perméat, peu concentré, peut être rejeté (cuve ou canalisation d'évacuation S3) tandis que le concentrat du second étage, concentré, est renvoyé à la cuve S1.

Dans cette deuxième filière, on prévoit deux étages d'osmose inverse (modules C1 et C2) qui constituent les deux seuls traitements de l'étape de concentration du procédé de traitement.

Cette configuration relativement simple convient notamment au traitement d'un effluent de nettoyage chimique de générateur de vapeur par exemple très chargé en composés azotés, non complètement éliminés par un seul étage d'osmose inverse comme dans l'exemple 2.

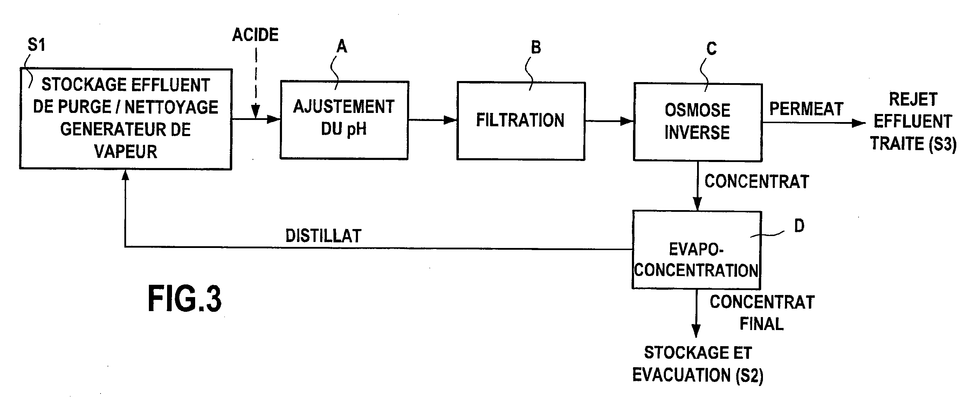

Selon un troisième mode de réalisation, on propose une troisième filière de traitement selon la figure 3, qui comporte une cuve S1 pour le stockage des effluents aqueux de purge ou de nettoyage des circuits de générateurs de vapeur. A partir de cette cuve S1, les effluents sont soumis à une étape d'ajustement du pH entre une valeur de 5 et de 6,5 (module A), puis à une étape de filtration (module B), et enfin à une étape de concentration au moyen d'un traitement par osmose (module C) suivi d'un traitement par évapo-concentration (module D).

A la sortie de l'étage d'osmose inverse (module C), le perméat, peu concentré, peut être rejeté (cuve ou canalisation d'évacuation S3) et le concentrat alimente le module D d'évapo-concentration.

A la sortie du module d'évapo-concentration D, le concentrat est stocké dans une cuve S2 avant d'être évacué et transporté vers un centre de destruction, tandis que le distillat d'évaporation, qui peut être encore assez concentré en composés azotés, est renvoyé à la cuve S1 en tête de filière de traitement.

Dans cette troisième filière, on prévoit un module d'osmose inverse et un module d'évapo-concentration qui constituent les deux seuls traitements de l'étape de concentration du procédé de traitement.

Cette configuration relativement simple convient notamment au traitement d'un effluent de nettoyage chimique de générateur de vapeur peu à moyennement chargé en composés azotés, métaux et acides organiques.

Pour réduire au maximum la consommation énergétique de cette troisième filière de traitement ainsi que le volume de concentrat produit, l'étape de concentration initiale est réalisée par osmose et le concentrat d'osmose est sur-concentré par évapo-concentration jusqu'à la limite de cristallisation des sels soit une concentration en sel pouvant aller jusqu'à 250 - 350 g/l selon la composition de l'effluent brut.

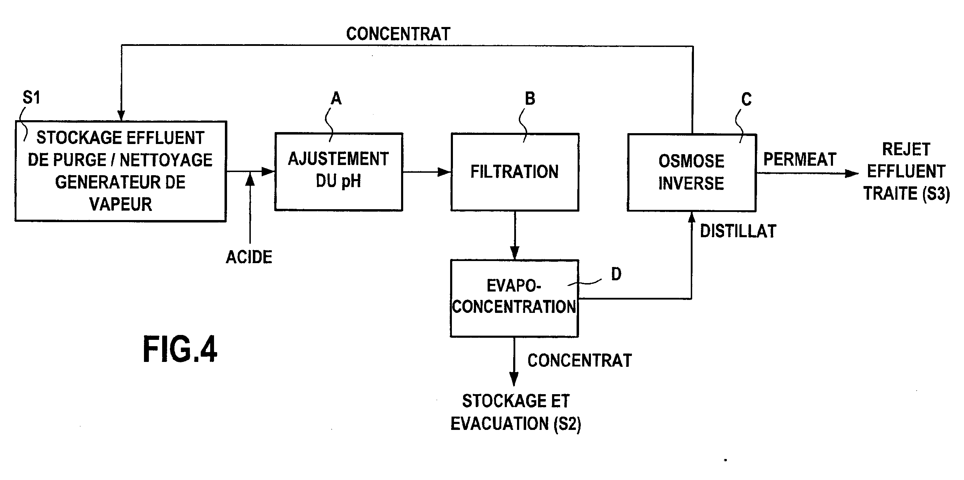

En variante, conformément au quatrième mode de réalisation, on propose une quatrième filière de traitement selon la figure 4 : dans ce cas, le traitement d'évapo-concentration est réalisé en tête de traitement de l'étape de concentration, et l'osmose est placée en traitement du condensat d'évaporation comme traitement de finition pour l'élimination des composés volatils résiduels non retenus par évapo-concentration.

Cette quatrième filière de traitement selon la figure 4 comporte une cuve S1 pour le stockage des effluents aqueux de purge ou de nettoyage des circuits de générateurs de vapeur. A partir de cette cuve S1, les effluents sont soumis à une étape d'ajustement du pH entre une valeur de 5 et de 6,5 (module A), puis à une étape de filtration (module B), et enfin à une étape de concentration au moyen d'un traitement par évapo-concentration (module D) suivi d'un traitement par osmose (module C).

A la sortie du module d'évapo-concentration D, le concentrat est stocké dans une cuve S2 avant d'être évacué et transporté vers un centre de destruction, tandis que le distillat, peu concentré, est envoyé au module d'osmose inverse C.

A la sortie du module d'osmose inverse C, le perméat, peu concentré, peut être rejeté (cuve ou canalisation d'évacuation S3) et le concentrat est renvoyé à la cuve S1 en tête de filière de traitement.

Dans cette quatrième filière, on prévoit un traitement par évapo-concentration et un traitement par osmose inverse qui constituent les deux seuls traitements de l'étape de concentration du procédé de traitement.

Cette configuration relativement simple convient notamment au traitement d'un effluent de nettoyage chimique de générateur de vapeur très chargé en composés azotés, en métaux et en acides organiques.

Une telle quatrième filière a notamment été mise en oeuvre dans l'exemple 3 présenté ci-après.

### Exemple 3 : Application de l'évapo-concentration au traitement d'un effluent de nettoyage chimique de générateur de vapeur de centrale nucléaire.

Les conditions de cet essai sont les suivantes :
- pré-traitement de filtration de 10 µm de seuil de coupure,
- ajustement du pH à 5,0 avant évapo-concentration (pour obtenir les meilleures conditions d'élimination de l'ammoniaque),
- module d'évapo-concentration à recirculation forcée et compression mécanique de vapeur (Température d'évaporation de 90°C),
- effluent très concentré contenant près de 150 g/l de salinité et des concentrations très élevées en EDTA, morpholine, ammoniaque et métaux.

**Tableau 3**

| | pH | EDTA | Morpho-line | NH4 | N2H4 | Fe | Zn | Ni | Mn | Cu |
|---|---|---|---|---|---|---|---|---|---|---|
| | | mg/l | mg/l | mg/l | mg/l | mg/l | mg/l | mg/l | mg/l | mg/l |
| Effluent brut | 9,5* | 000 | 21 000 | 10000 | 6 | 25 | 2080 | 450 | 170 | 30 |
| Distillat d'évapo- concentration pour R= 70 % | 8,4 | - | 510 | 0,6 | 0,05 | < 1 | < 1 | < 1 | < 1 | < 1 |
| Perméat osmose sur distillat d'évapo- concentration | 6,8 | - | < 7,5 | < 0,5 | < 0,05 | < 1 | < 1 | < 1 | < 1 | < 1 |
| Normes de rejet | 6,5- 8,5 | - | 10 | 7 | 15 | 5** | 5** | 5** | 5** | 5** |

| | | | | | | | | | | |
|---|---|---|---|---|---|---|---|---|---|---|
| * Valeur sur effluent non acidifié. L'essai d'évapo-concentration a été réalisé sur échantillon acidifié à pH= 5 - 5,5 avec de l'acide sulfurique ** Norme de rejet en métaux totaux | | | | | | | | | | |

Un facteur de concentration hydraulique volumique (facteur R) maximal de 70 % a été obtenu. La concentration en matière sèche du concentrât est de l'ordre de 45 % en poids. Les résultats obtenus sur l'abattement des composés azotés et des métaux sont satisfaisants mais la limite de rejet n'est pas respectée pour la morpholine. Un post traitement du distillat d'évaporation par osmose inverse permet d'éliminer plus de 98% de la morpholine résiduelle et de respecter la norme de rejet du site fixée à 10 mg/l.

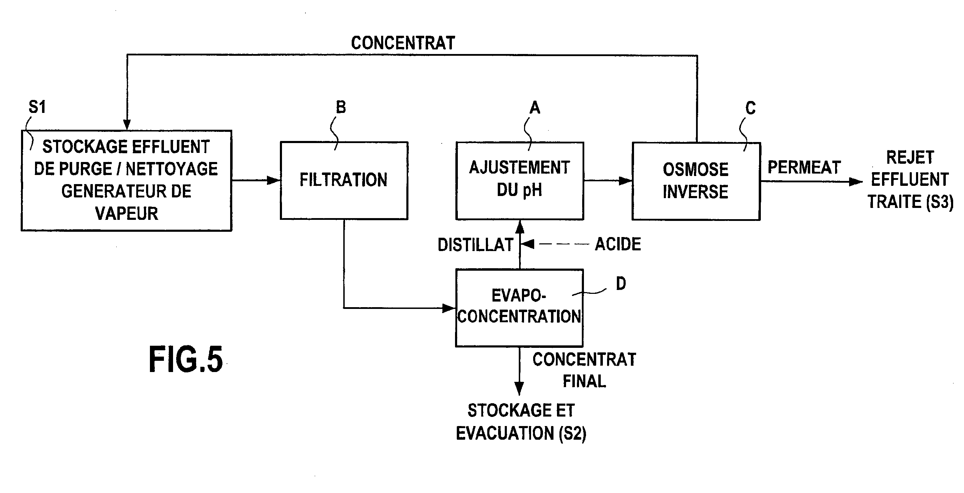

Dans le cas de la cinquième filière de traitement visible sur la figure 5, on réalise l'étape d'ajustement du pH (module A) après le traitement par évapo-concentration (module D).

Ainsi, dans cette cinquième filière de traitement proposée, la seule différence avec la quatrième filière décrite précédemment revient à ne pas réaliser l'étape A d'ajustement du pH en amont de l'étape de filtration (module B), et en amont du traitement par évapo-concentration (module D), mais en aval du traitement par évapo-concentration (module D). On comprend que cette modification place néanmoins cette étape d'ajustement du pH toujours en amont du traitement par osmose inverse réalisé par le module C.

Pour atteindre des concentrations finales dans l'effluent traité très basses (inférieures à 10 mg/l) lorsque l'effluent brut contient de fortes concentrations en polluants (au-delà du g/l en morpholine, amines, hydrazine, EDTA, métaux), la présente invention propose de rajouter un traitement d'affinage sur résine d'échange d'ions qui complète l'étape de concentration du procédé de traitement des effluents en ayant recours à un module supplémentaire E de résine d'échange d'ions.

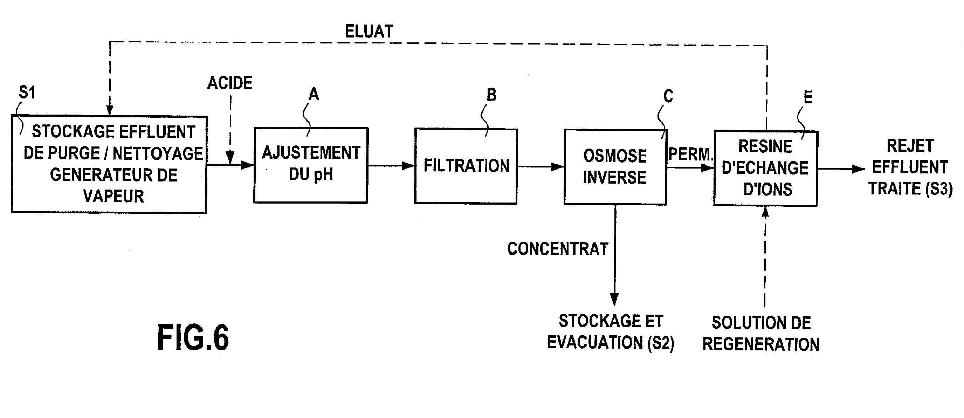

Un tel procédé de traitement complété avec un traitement final de concentration sous la forme d'un affinage sur résine d'échange d'ions correspond aux sixième, septième, huitième et neuvième filières de traitement représentées respectivement sur les figures 6 à 9.

Ces sixième, septième, huitième et neuvième filières de traitement des figures 6 à 9 ne diffèrent respectivement des première, troisième, quatrième et cinquième filières de traitement des figures 1 et 3 à 5 qu'en ce qu'un module de traitement par résine d'échange d'ions E est placée comme traitement supplémentaire et dernier traitement pour l'étape de concentration.

Ce module de traitement par résine d'échange d'ions E est alimenté en solution de régénération et à sa sortie, l'éluat est renvoyé à la cuve S1, en tête de filière de traitement, tandis que l'effluent traité, peu concentré, peut être rejeté (cuve ou canalisation d'évacuation S3).

Ainsi, dans la sixième filière de traitement de la figure 6, le module de traitement par résine d'échange d'ions E est placé en aval du module de traitement par osmose inverse C et est alimenté par le perméat de ce module C.

Dans ce cas de la sixième filière de traitement de la figure 6, l'étape de concentration est réalisée seulement par le traitement d'osmose inverse et par le traitement par résine échangeuse d'ions, ledit traitement par résine échangeuse d'ions étant réalisé en aval du traitement d'osmose inverse. Ainsi, dans ce cas, il n'y a pas de traitement par évapo-concentration.

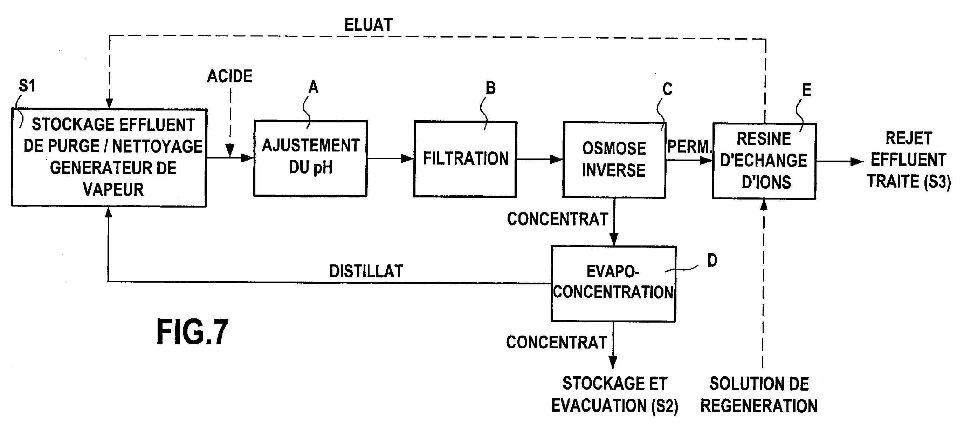

Concernant la septième filière de traitement de la figure 7, le module de traitement par résine d'échange d'ions E est placé en aval du module de traitement par osmose inverse C et est alimenté par le perméat de ce module C, le module D d'évapo-concentration restant placé en aval du module C d'osmose inverse en étant alimenté par le concentrat de ce module C.

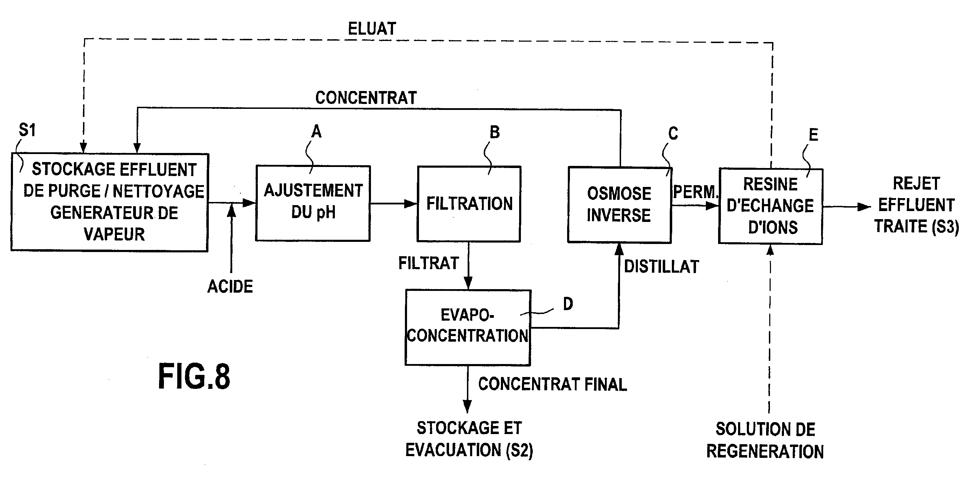

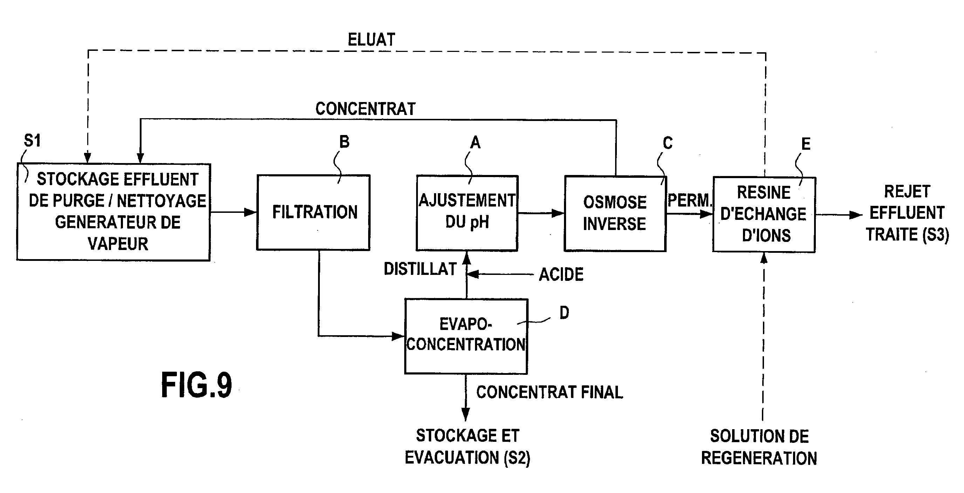

S'agissant de la huitième filière de traitement de la figure 8 et de la neuvième filière de traitement de la figure 9 le module de traitement par résine d'échange d'ions E est placé en aval du module de traitement par osmose inverse C et est alimenté par le perméat de ce module C.

Dans le cas des sixième, septième, huitième et neuvième filières de traitement des figures 6 à 9, la saumure de régénération (ou éluat) du module de résine échangeuse d'ions E est renvoyée en tête de filière de traitement (cuve S1) avec l'effluent brut et l'effluent traité, peu concentré, peut être rejeté (cuve ou canalisation d'évacuation S3).

Parmi ces sixième, septième, huitième et neuvième filières de traitement des figures 6 à 9, on note que la sixième filière de traitement de la figure 6 constitue une configuration économique comprenant un ajustement du pH, puis une osmose et un affinage sur résine échangeuse d'ions. Cette configuration est particulièrement adaptée pour les effluents peu concentrés à moyennement concentrés (0,1 à 10 g/l en polluants à titre indicatif), car cette sixième filière de traitement permet d'atteindre un facteur de concentration intéressant sans mise en oeuvre d'une étape d'évapo-concentration.

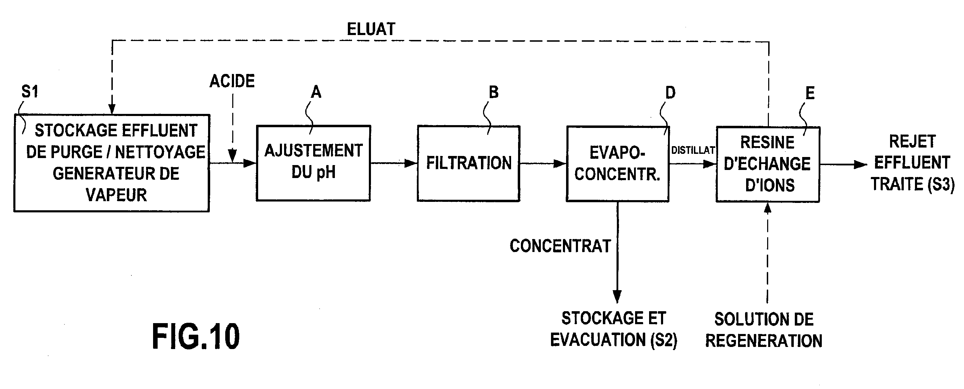

Selon un autre mode de réalisation, on propose une dixième filière de traitement selon la figure 10, qui comporte une cuve S1 pour le stockage des effluents aqueux de purge ou de nettoyage des circuits de générateurs de vapeur. A partir de cette cuve S1, les effluents sont soumis à une étape d'ajustement du pH entre une valeur de 5 et de 6,5 (module A), puis à une étape de filtration (module B), et enfin à une étape de concentration au moyen d'un traitement par évapo-concentration (module D) suivi d'un traitement par résine d'échange d'ions (module E). A l'issue du traitement par évapo-concentration, le concentrat est stocké dans une cuve S2 avant d'être évacué et transporté vers un centre de destruction, tandis que le distillat est envoyé vers le module de traitement par résine d'échange d'ions E.

Le module de traitement par résine d'échange d'ions E est alimenté en solution de régénération. A la sortie du module de traitement par résine d'échange d'ions E, l'éluat du module de résine échangeuse d'ions E est renvoyée en tête de filière de traitement (cuve S1) avec l'effluent brut et l'effluent traité, peu concentré, peut être rejeté (cuve ou canalisation d'évacuation S3).

Dans cette dixième filière de traitement, l'étape de concentration de l'effluent brut est réalisée par le traitement d'évapo-concentration (module D) et le traitement par résine échangeuse d'ions (module E), ledit traitement par résine échangeuse d'ions étant réalisé sur le distillat du traitement d'évapo-concentration, c'est-à-dire en aval du traitement d'évapo-concentration.

Cette configuration conforme à la dixième filière de traitement qui ne comporte que ces deux étages de traitement est particulièrement adaptée pour les très fortes concentrations en polluants (plus de quelques g/l) comme il ressort de l'exemple 4 ci-après.

### Exemple 4 : Application de l'évapo-concentration au traitement d'un effluent de nettoyage chimique de générateur de vapeur avec étape finale d'affinage sur résine d'échange d'ions cationique.

Les conditions de cet essai sont les suivantes :
- pré-traitement de filtration de 10 µm de seuil de coupure, et
- ajustement du pH à 6-6,5 avant évapo-concentration.

**Tableau 4**

| | pH | Morpholine | NH4 | N2H4 |
|---|---|---|---|---|
| | | mg/l | mg/l | mg/l |
| Effluent brut | 9,5* | 9100 | 200 | 6,5 |
| Effluent traité (distillat) en sortie évapo-concentration | 8,8 | 35 | 86 | 0,08 |
| Effluent après traitement final sur résine échangeuse d'ions | - | 1,1 | < 1 | < 0,1 |
| Normes de rejet | 6,5-8,5 | 10 | 7 | 15 |

| | | | | |
|---|---|---|---|---|
| * Valeur sur effluent non acidifié. | | | | |

Le facteur de concentration hydraulique (R) appliqué est de 60%.

Pour les faibles concentrations résiduelles en ammoniaque et en morpholine (moins de 100 mg/l par exemple) dans le distillat après traitement d'évaporation, un traitement d'affinage sur résine échangeuse d'ions est plus économique qu'un traitement par osmose inverse. Le tableau 4 montre qu'un traitement final d'affinage sur un filtre de résines échangeuses d'ions placée en traitement du distillat d'évapo-concentration permet de respecter les normes de rejet du site sur les composés azotés alors que l'évapo-concentration seule ne le permet pas.

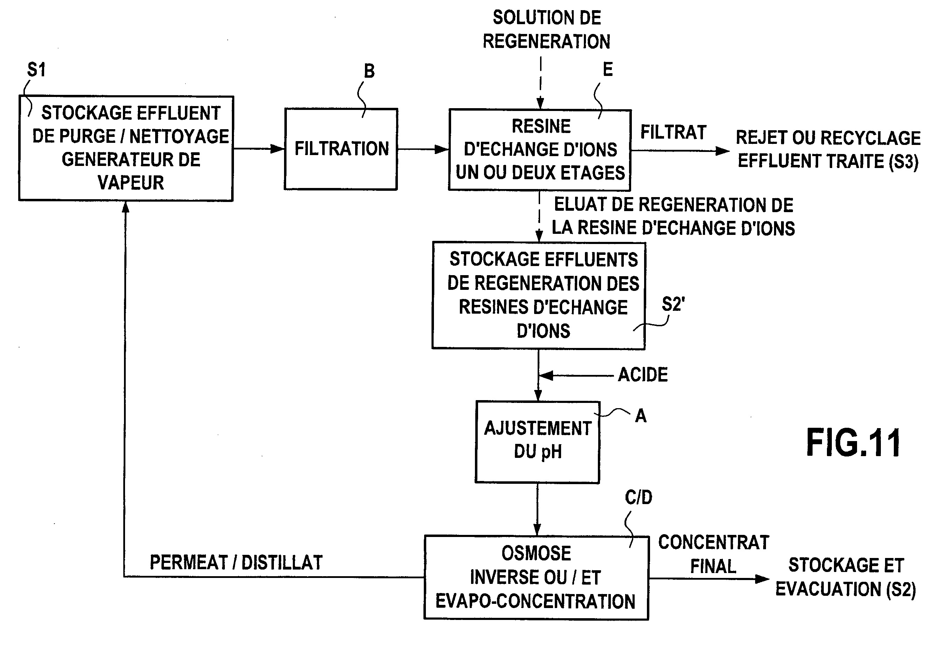

On se rapporte maintenant à la figure 11 qui présente une onzième filière de traitement particulièrement adaptée pour le traitement des effluents très peu concentrés (concentrations inférieures à 0,1 g/l).

Dans ce cas, l'étape de concentration comprend en outre un traitement préalable par résine échangeuse d'ions qui est mis en oeuvre avant tout autre traitement de l'étape de concentration. Dans ce cas, on comprend que l'étape de concentration comprend une première sous-étape de pré-concentration par résine échangeuse d'ions.

Cette onzième filière de traitement selon la figure 11 comporte une cuve S1 pour le stockage des effluents aqueux de purge ou de nettoyage des circuits de générateurs de vapeur. A partir de cette cuve S1, les effluents sont soumis à une étape de filtration (module B), puis à un premier traitement de l'étape de concentration, au moyen d'un module de résines échangeuses d'ions E alimenté en solution de régénération.

A la sortie du module E, le filtrat, peu concentré, peut être rejeté (cuve ou canalisation d'évacuation S3) et l'éluat est envoyé vers une cuve S2' de stockage des effluents de régénération des résines d'échange d'ions.

Ensuite, depuis cette cuve S2', lesdits effluents de régénération des résines d'échange d'ions sont soumis à une étape d'ajustement du pH entre une valeur de 5 et de 6,5 (module A), et enfin à un deuxième traitement de l'étape de concentration au moyen d'un traitement par évapo-concentration (module D) ou d'un traitement par osmose (module C). A la sortie de ce deuxième traitement de l'étape de concentration, le concentrat final est stocké dans une cuve S2 avant d'être évacué et transporté vers un centre de destruction, tandis que le perméat ou le distillat est renvoyée en tête de filière de traitement (cuve S1) avec l'effluent brut s'il est encore trop concentré en polluants (notamment en composés azotés) ; sinon, il peut être dirigé vers la cuve S3, c'est à dire vers le rejet, ou bien encore être recyclé.

Ainsi, l'étape de concentration de la onzième filière de traitement comprend un premier traitement sur résines échangeuses d'ions (module E) (un étage cationique ou lit mélangé ou deux étages cationique+anionique) puis les effluents de régénération sont concentrés par au moins un deuxième traitement qui consiste soit en un traitement par osmose inverse (module C), soit un traitement par évapo-concentration (module D), soit un double traitement par osmose inverse et par évapo-concentration (modules C et D), soit par une des filières déjà décrite en liaison avec l'une des figures 1 à 10.

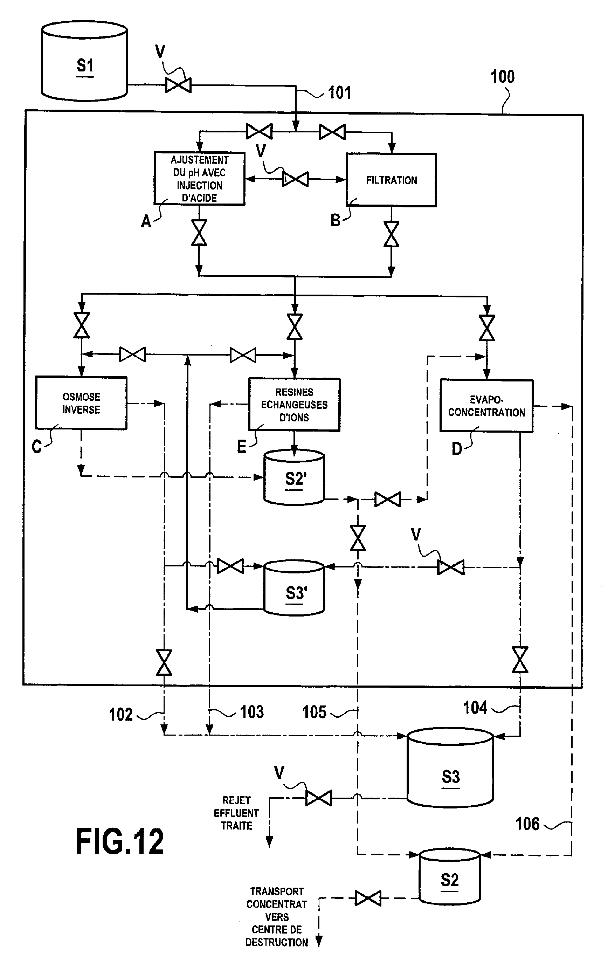

On se rapporte maintenant à la figure 12 qui représente schématiquement une unité mobile 100 permettant la mise en oeuvre du procédé selon l'invention.

Une telle unité mobile 100 permettant de mettre en oeuvre les différents assemblages d'étapes unitaires des premier au onzième mode de réalisation du procédé tels que décrits ci-dessus, est installée soit à poste fixe près des générateurs de vapeur produisant les effluents à traiter, soit sur un châssis mobile (une remorque ou un container) qui peut être déplacé pour traiter les effluents de générateurs de vapeur de différents sites, soit sur un site de traitement spécialisé vers lequel sont transportés les effluents à traiter.

Dans sa configuration la plus complète, l'unité mobile 100 comprend un module B de tamisage/filtration de sécurité ainsi que les autres modules d'étapes unitaires de traitement précédemment décrits: le module A d'ajustement du pH à l'acide, le module d'osmose inverse C (un ou deux étages), le module d'évapo-concentration D et le module E de résine d'échange d'ions.

L'effluent brut subit dans tous les cas un premier traitement de filtration pour éliminer les matières en suspension puis, selon sa concentration en polluants, il sera envoyé au moins vers l'un des deux modules D et E de traitement de l'étape de concentration, et passera par le module A d'ajustement du pH.

L'effluent brut subit une étape de concentration en traversant au moins deux des trois modules C, D et E (osmose inverse, évapo-concentration et résine d'échange d'ions)

Pour permettre de mettre en oeuvre tous les différents modes de réalisation possibles du procédé de traitement, l'entrée et la sortie de chacun des quatre modules A, C, D et E sont connectés au module B de pré-filtration et sont connectées entre elles par des canalisations formant une connexion hydraulique.

L'unité mobile 100 comporte également une cuve intermédiaire de stockage S2' des concentrats diposée en aval des modules C et E, ainsi qu'une cuve intermédiaire de stockage S3' des effluents traités diposée en aval des modules C, D et E.

Un conduit d'entrée 101 relie l'unité mobile 100 à la cuve S1 de stockage des effluents bruts, des conduits de sortie 102, 103, et 104 relient la sortie des modules C, D et E à une cuve de stockage des effluents traités S3. En outre, des conduits de sortie 105 et 106 relient respectivement la cuve intermédiaire de stockage S2' des concentrats et le module d'évapo-concentration D à une cuve de stockage des concentrats S2.

Chaque canalisation et chaque conduit peut être ouvert(e) ou fermé(e) par une vanne V.

A titre d'exemple, la filtration à mettre en place dans le module de filtration B peut aller du simple tamis à maille de 100-150 µm pour protéger le module D d'évapo-concentration à des filtres à poche de 20 à 50 µm pour protéger le module C d'osmose ou encore un filtre à cartouches (notamment à seuil de coupure moyen de 10µm) ou bien encore un équipement de filtration granulaire (filtre à sable ou filtre multimédia dont les seuils de coupure sont typiquement de 2 à 10 µm) ou un équipement de filtration membranaire de type microfiltration (seuil de coupure de 0,1-0,5 µm) ou bien un équipement d'ultrafiltration (seuil de coupure de l'ordre de 0,01-0,05 µm).

S'agissant du module B d'ajustement du pH des effluents, on peut utiliser notamment l'acide sulfurique, l'acide chlorhydrique et l'acide nitrique.

Selon une variante pouvant être mise en oeuvre de façon optionnelle dans tous les modes de réalisation du procédé de traitement des effluents présentés, on met en oeuvre en outre l'étape supplémentaire suivante : le concentrat liquide est séché jusqu'à former un concentrat sec. Il s'agit de réaliser une évapo-cristallîsation qui est adaptée lorsque le centre de destruction agit par incinération.

## Revendications

1. Procédé de traitement des effluents aqueux de purge ou de nettoyage des circuits de générateurs de vapeur, **caractérisé en ce que** les étapes suivantes sont mises en oeuvre :
- fourniture d'un effluent présentant un pH basique et comportant des matières insolubles, des composés organiques à fonction azotée, des métaux et acides organiques,
- filtration de l'effluent brut pour séparer les matières insolubles de l'effluent filtré,
- concentration de l'effluent filtré en deçà de la limite de solubilité des espèces dissoutes de façon à obtenir un concentrat liquide, l'étape de concentration comportant au moins les traitements d'évapo-concentration et d'osmose inverse, le traitement d'évapo-concentration étant réalisé sur le concentrat d'osmose et l'étape de concentration comprenant en outre un traitement par résine échangeuse d'ions sur le perméat du traitement d'osmose inverse, et
le pH de l'effluent étant ajusté et maintenu en une seule étape entre une valeur de 5 et de 6,5 en amont du traitement d'osmose inverse.

2. Procédé selon la revendication 1, **caractérisé en ce que** l'ajustement du pH est réalisé en amont de l'étape de filtration.

3. Procédé selon l'une quelconque des revendications précédentes, **caractérisé en ce que** l'étape de concentration comprend en outre un traitement préalable par résine échangeuse d'ions qui est mis en oeuvre avant tout autre traitement de l'étape de concentration.

4. Procédé selon l'une quelconque des revendications précédentes, **caractérisé en ce que** l'on met en oeuvre en outre l'étape supplémentaire suivante : le concentrat liquide est séché jusqu'à former un concentrat sec.

5. Procédé selon l'une quelconque des revendications précédentes, **caractérisé en ce que** le traitement d'osmose inverse est réalisé en un seul étage.

6. Procédé selon l'une quelconque des revendications précédentes, **caractérisé en ce que** le traitement d'osmose inverse est réalisé en deux étages, avec alimentation du second étage d'osmose inverse avec le perméat du premier étage.

7. Unité mobile pour le traitement des effluents aqueux de purge et de nettoyage des circuits de générateurs de vapeur, **caractérisée en ce qu'**elle comporte :
- un conduit d'entrée (101) relié à une cuve (S1) contenant un effluent présentant un pH basique et comportant des matières insolubles, des composés organiques à fonction azotée, des métaux et acides organiques,
- un module de filtration (B) apte à séparer les matières insolubles de l'effluent filtré,
- un module de traitement par osmose inverse (C) avec une entrée, une sortie pour le perméat et une sortie pour le concentrat,
- un module de traitement par évapo-concentration (D) avec une entrée, une sortie pour le distillat et une sortie pour le concentrat, le module (D) étant placé en aval du module (C) d'osmose inverse et étant alimenté par le concentrat de ce module (C),
- un unique module d'ajustement du pH (A) avec une entrée et une sortie, situé en amont du module de traitement par osmose inverse (C) et apte à ajuster et maintenir le pH de l'effluent entre une valeur de 5 et de 6,5,
- un module de traitement par résine échangeuse d'ions (E) avec une entrée pour la solution de régénération, une entrée pour le liquide à traiter, une sortie pour l'éluat et une sortie pour le filtrat, ce module de traitement (E) étant placé en aval du module de traitement par osmose inverse (C) et étant alimenté par le perméat de ce module (C),
- au moins un conduit de sortie (102, 103, 104) destiné à la sortie de l'effluent traité, et
- des canalisations reliant entre eux, au conduit d'entrée et au conduit de sortie, les entrées et les sorties des différents modules, et des vannes (V) permettant l'ouverture et la fermeture desdites canalisations.

## Patentansprüche

1. Verfahren zur Behandlung von wässrigen Ableitungen aus der Spülung oder der Reinigung von Dampferzeuger-Kreisläufen, **dadurch gekennzeichnet, dass** die folgenden Schritte durchgeführt werden:
- Bereitstellen einer Ableitung, die einen basischen pH-Wert aufweist und die unlösliche Stoffe, organische Verbindungen mit Stickstoff-Funktion, Metalle und organische Säuren umfasst,
- Filtrieren der Rohableitung, um die unlöslichen Stoffe aus der filtrierten Ableitung abzutrennen,
- Konzentrieren der filtrierten Ableitung diesseits der Löslichkeitsgrenze der gelösten Spezies, um ein flüssiges Konzentrat zu erhalten, wobei der Konzentrationsschritt wenigstens die Verdampfungskonzentrations- und Umkehrosmose-Behandlungen umfasst, wobei die Verdampfungskonzentrationsbehandlung an dem Osmose-Konzentrat durchgeführt wird und wobei der Konzentrationsschritt ferner eine Behandlung mittels Ionenaustauscherharz an dem Permeat aus der Umkehrosmose-Behandlung umfasst, und
wobei der pH-Wert der Ableitung in einem einzigen Schritt zwischen einem Wert von 5 und von 6,5 vor der Umkehrosmose-Behandlung eingestellt und gehalten wird.

2. Verfahren nach Anspruch 1, **dadurch gekennzeichnet, dass** die Einstellung des pH-Wertes vor dem Filtrationsschritt vollzogen wird.

3. Verfahren nach einem der vorhergehenden Ansprüche, **dadurch gekennzeichnet, dass** der Konzentrationsschritt ferner eine Vorbehandlung mittels Ionenaustauscherharz umfasst, die vor jeder anderen Behandlung des Konzentrationsschrittes durchgeführt wird.

4. Verfahren nach einem der vorhergehenden Ansprüche, **dadurch gekennzeichnet, dass** ferner der folgende zusätzliche Schritt durchgeführt wird: das flüssige Konzentrat wird bis zur Bildung eines Trockenkonzentrats getrocknet.

5. Verfahren nach einem der vorhergehenden Ansprüche, **dadurch gekennzeichnet, dass** die Umkehrosmose-Behandlung in einer einzigen Stufe durchgeführt wird.

6. Verfahren nach einem der vorhergehenden Ansprüche, **dadurch gekennzeichnet, dass** die Umkehrosmose-Behandlung in zwei Stufen, unter Speisen der zweiten Umkehrosmose-Stufe mit dem Permeat aus der ersten Stufe durchgeführt wird.

7. Mobile Einheit für die Behandlung von wässrigen Ableitungen aus der Spülung und der Reinigung von Dampferzeuger-Kreisläufen, **dadurch gekennzeichnet, dass** sie umfasst:
- eine Eingangsleitung (101), die mit einem Behälter (S1) verbunden ist, welcher eine Ableitung enthält, die einen basischen pH-Wert aufweist und die unlösliche Stoffe, organische Verbindungen mit Stickstoff-Funktion, Metalle und organische Säuren umfasst,
- ein Filtrationsmodul (B), das geeignet ist, die unlöslichen Stoffe aus der filtrierten Ableitung abzutrennen,
- ein Modul zur Umkehrosmose-Behandlung (C) mit einem Einlass, einem Auslass für das Permeat und einem Auslass für das Konzentrat,
- ein Modul zur Verdampfungskonzentrationsbehandlung (D) mit einem Einlass, einem Auslass für das Destillat und einem Auslass für das Konzentrat, wobei das Modul (D) dem Modul (C) zur Umkehrosmose nachgeschaltet ist und mit dem Konzentrat aus diesem Modul (C) gespeist wird,
- ein einziges Modul zur Einstellung des pH-Wertes (A) mit einem Einlass und einem Auslass, das dem Modul zur Umkehrosmose-Behandlung (C) vorgeschaltet ist und das geeignet ist, den pH-Wert der Ableitung zwischen einem Wert von 5 und von 6,5 einzustellen und zu halten,
- ein Modul zur Behandlung mittels Ionenaustauscherharz (E) mit einem Einlass für die Regenerationslösung, einem Einlass für die zu behandelnde Flüssigkeit, einem Auslass für das Eluat und einem Auslass für das Filtrat, wobei dieses Behandlungsmodul (E) dem Modul zur Umkehrosmose-Behandlung (C) nachgeschaltet ist und mit dem Permeat aus diesem Modul (C) gespeist wird,
- wenigstens eine Ausgangsleitung (102, 103, 104), die für den Austritt der behandelten Ableitung bestimmt ist, und
- Rohrleitungen, die an der Eingangsleitung und an der Ausgangsleitung die Einlässe und die Auslässe der verschiedenen Module untereinander verbinden, sowie Ventile (V), die das Öffnen und das Schließen der Rohrleitungen ermöglichen.

## Claims

1. A method of treating water effluent from purging or cleaning steam generator circuits, the method being **characterized in that** the following steps are performed:
- providing an effluent that presents a basic pH value and that includes insoluble matter, organic compounds having a nitrogen function, metals and organic acids;
- filtering the raw effluent to separate insoluble matter from the filtered effluent;
- concentrating the filtered effluent to below the solubility limit of the dissolved species so as to obtain a liquid concentrate, the concentration step including at least evapo-concentration treatment and reverse osmosis treatment, wherein the evapo-concentration treatment is performed on the osmosis concentrate and wherein the concentration step further comprises treatment by ion exchange resin on the permeate of the reverse osmosis treatment; and
the pH of the effluent being adjusted to and maintained in a single step in the range 5 to 6.5 upstream from the reverse osmosis treatment.

2. A method according to claim 1, **characterized in that** the pH is adjusted upstream from the filtering step.

3. A method according to any preceding claim, **characterized in that** the concentration step further comprises prior treatment by ion exchange resin that is implemented before any other treatment of the concentration step.

4. A method according to any preceding claim, **characterized in that** the following additional step is implemented: the liquid concentrate is dried to form a dry concentrate.

5. A method according to any preceding claim, **characterized in that** the reverse osmosis treatment is performed in a single stage.

6. A method according to any preceding claim, **characterized in that** the reverse osmosis treatment is performed in two stages, with the second reverse osmosis stage being fed with the permeate from the first stage.

7. A mobile unit for treating water effluent from purging or cleaning steam generator circuits, the unit being **characterized in that** it comprises:
- an inlet duct (101) connected to a vessel (S1) containing an effluent that presents a basic pH value and that includes insoluble matter, organic compounds having a nitrogen function, metals and organic acids;
- a filter module (B) suitable for separating insoluble matter from the filtered effluent;
- a reverse osmosis treatment module (C) having an inlet, a permeate outlet, and a concentrate outlet;
- an evapo-concentration treatment module (D) having an inlet, a distillate outlet, and a concentrate outlet, wherein the module (D) is placed downstream from the module (C) for reverse osmosis and it is fed with the concentrate from the module (C);
- only one pH adjustment module (A) having an inlet and an outlet, said module (A) being located upstream from the reverse osmosis treatment module (C) and being suitable for adjusting and maintaining the pH of the effluent in the range 5 to 6.5;
- a module (E) for treatment by ion exchange resin, the module having an inlet for regeneration solution, an inlet for liquid to be treated, and an outlet for eluate, and an outlet for filtrate, wherein this treatment module (E) is placed downstream from the module (C) for reverse osmosis and it is fed with the permeate from the module (C);
- at least one outlet duct (102, 103, 104) for delivering treated effluent; and
- pipes interconnecting the inlet ducts, the outlet ducts, and the inlets and outlets of the various modules, and valves (V) enabling said pipes to be opened and closed.
